Europäisches Patentamt

European Patent Office

Office européen des brevets

(11) Publication number: **0 329 490**
**A2**

(12)

# EUROPEAN PATENT APPLICATION

(21) Application number: 89301629.5

(22) Date of filing: 20.02.89

(51) Int. Cl.4: **B 32 B 25/08**
**B 32 B 31/28**

(30) Priority: 19.02.88 JP 37075/88
07.10.88 JP 252103/88

(43) Date of publication of application:
23.08.89 Bulletin 89/34

(84) Designated Contracting States: **DE GB NL**

(71) Applicant: **THE FURUKAWA ELECTRIC CO., LTD.**
**6-1, 2-chome, Marunouchi Chiyoda-ku**
**Tokyo (JP)**

(72) Inventor: **Kemmotsu, Takaaki**
**1143 Furukawadenko Shataku 17-24 Sumiredaira**
**Hiratsuka-shi Kanagawa (JP)**

Okada, Mitsunori
808-1 Kamiiida-cho Izumi-ku
Yokohamashi Kanagawa (JP)

Hashimoto, Makoto
1391-20 Fukaya
Ayase-shi Kanagawa (JP)

Tokuda, Masao
29-3-508 Takahamadai
Hiratsuka-shi Kanagawa (JP)

Takai, Syunichi
2-4-12 Fujimigaoka Ninomiya-machi
Nakagun Kanagawa (JP)

(74) Representative: **Holmes, Michael John et al**
**Frank B. Dehn & Co. Imperial House 15-19 Kingsway**
**London WC2B 6UZ (GB)**

(54) Process for preparing crosslinked polyolefin foam.

(57) A process of preparing a crosslinked polyolefin foam. A second sheet made of a polyolefin composition containing a foaming agent is laminated integrally onto at least one surface of a first sheet made of a polyolefin composition containing a foaming agent and a chemical crosslinking agent, to obtain a laminated sheet. An ionizing radiation is irradiated onto the surface of said second sheet, and then the entire laminated sheet is heated to obtain a foamed sheet having smooth surfaces and also flexibility. By varying the formulation for the second sheet, various properties such as formability, heat resistance, antistatic properties and flexibility can suitably be adjusted.

EP 0 329 490 A2

Description

## PROCESS FOR PREPARING CROSSLINKED POLYOLEFIN FOAM

## BACKGROUND OF THE INVENTION

This invention relates to a process for preparing a crosslinked polyolefin foam, more particularly to a process for preparing a crosslinked polyolefin foam having a smooth surface and excellent formability, which can be obtained in the form of sheets in a variety of thicknesses (thin to thick ones), wherein the characteristics such as heat resistance, antistatic properties and resilience (cushioning characteristics) in the surface layers can be adjusted at will.

The following two methods have conventionally been known for preparing a crosslinked polyolefin foam.

In the first method, a polyolefin is mixed with a heat decomposable foaming agent, and the resulting mixture is formed into a sheet. The formed sheet is irradiated with an ionizing radiation to crosslink the polyolefin, finally followed by heating of the entire sheet to effect heat decomposition of the foaming agent, whereby the entire sheet is transformed into a foamed sheet with the aid of the gas generated by the decomposition.

However, in this first method, the ability of the radiation to penetrate through the sheet is limited, so that the crosslinking of the polyolefin may not be achieved sufficiently when the sheet is thick, resulting in an insufficient expansion ratio in the subsequent expanding process. Namely, according to this method, the thickness of the resulting foamed sheet is limited, i.e. a thick foamed sheet cannot be obtained.

In the second method, a polyolefin is mixed with a heat decomposable foaming agent and a chemical crosslinking agent having a decomposition temperature lower than that of the foaming agent, and the resulting mixture is formed into a sheet, which is then subjected to two-step heating in an oven under normal pressure. To describe in detail, in the first heat treatment, the chemical crosslinking agent is first decomposed to allow the polyolefin to crosslink through the action of the decomposition, and then in the second heat treatment, the foaming agent is heat-decomposed to transform the entire sheet into a foam with the aid of the gas generated by the decomposition.

However, in this second method, the heat treatments are carried out in the atmosphere, so that the surface layers of the sheet may be brought into contact with the air. Consequently, radicals generated upon heat decomposition of the chemical crosslinking agent in the surface layers may be consumed because the oxygen contained in the air captures the radicals to prevent crosslinking in the surface layers. Accordingly, cracks, ruptures and the like may be formed in the membrane of cells near the surface layers due to the action of the pressure caused by the gas generated in the internal portion of the sheet through decomposition of the foaming agent in the subsequent step, whereby the resulting foamed sheet may have a rough surface which is not agreeable to touch.

With a view to overcoming such problem, there has been proposed a method in which the above two methods are combined. For example, in Japanese Patent Publication No. 28503/1970 or Japanese Provisional Patent Publication No. 250039/1987, a method is disclosed in which a polyolefin is homogeneously mixed with a foaming agent and a chemical crosslinking agent to prepare a composition. The surface of a sheet formed by this composition is first irradiated to achieve crosslinking only at the surface, followed by heating of the entire sheet to effect expansion, thereof.

In this method, however, the surface of the sheet made of this composition is liable to have an extremely high degree of crosslinking compared with that of the internal portion, since the surface of the sheet is double crosslinked by the irradiation and by the action of the chemical crosslinking agent. Consequently, problems occur that the surface layer is liable to be thick, and the resulting foamed sheet may have poor flexibility to form crimps when it is bent.

On the other hand, in Japanese Patent Publication No. 42949/1972, a method is disclosed in which a nonexpansive film or sheet is laminated on both sides of a core sheet comprising a polyolefin composition containing a foaming agent and a crosslinking agent, followed by heating of the entire laminate sheet to achieve expansion of the core sheet. However, this method suffers problems that, since the film or sheet forming the surface layer is of nonexpansive material, variation may be observed in the surface appearance of the resulting foamed sheet due to the influence of the thickness of the film or sheet used as the surface layer, and further the film or sheet must have a critical value of thickness in order to obtain uniform expansion of the core material. Moreover, the resulting foamed sheet has poor flexibility including cushioning characteristics because these surface layers are of nonexpansive material.

Another method is known in which a first foamed sheet is prepared using a chemical crosslinking agent, and a second foamed sheet is prepared by means of irradiation; these two foamed sheets are laminated together by means of heat fusion or by use of an adhesive to provide a thick foamed sheet.

In this method, however, a rigid layer such as a heat-fused layer or an adhesive layer is present along the interface between these two foamed sheets, causing the resulting laminated sheet to have a high flexural rigidity, i.e. flexibility will be lost in the resulting laminated sheet. Furthermore, these laminated sheets may separate along the lamination interface in the course of an extended period of use. Moreover, in this method, since two different types of foamed sheets are laminated giving a higher cost, the final foamed sheet may be expensive.

## OBJECTS AND SUMMARY OF THE INVENTION

An object of this invention is to provide a process for preparing a crosslinked polyolefin foam of a multilayered structure having smooth surfaces and excellent formability.

Another object of this invention is to provide a process for preparing a crosslinked polyolefin foam of a multilayered structure, in which properties such as heat resistance, antistatic properties, and compression set as defined in Item D1621, ASTM, in the surface layers can be adjusted arbitrarily.

Still another object of this invention is to provide a process for preparing a crosslinked polyofelin foam in a series of continuous steps, whether it may be a thick or thin sheet.

Further object of this invention is to provide a process for preparing a crosslinked polyolefin foam of a multilayered structure having excellent flexibility and free from separation of layers along the lamination interface.

Still further object of this invention is to provide a process for preparing an inexpensive crosslinked polyolefin foam of a multilayered structure.

According to this invention, there is provided a process for preparing a crosslinked polyolefin foam, comprising the following steps of:

laminating integrally, to at least one surface of a first sheet made of a polyolefin composition containing a foaming agent and a chemical crosslinking agent, a second sheet made of a polyolefin composition containing a foaming agent to obtain a laminated sheet;

irradiating an ionizing radiation onto the surface of the second sheet; and then

heating the entire laminated sheet.

In the laminated sheet according to this invention, the first sheet and the second sheet are integrally formed into a laminate by means of coextrusion or heat fusion.

According to this invention, the second sheet as the surface layer has suitably been crosslinked by irradiation prior to achieving expansion of the entire sheet. When the entire sheet is allowed to expand, the radicals generated within the first sheet which is a core material achieve crosslinking of the polyolefin in the first sheet without being captured by the oxygen contained in the air by virtue of the barrier effect exhibited by the surface layer (second sheet), and further the decomposition gas generated from the foaming agent is prevented from dissipating out of the sheet by the action of the crosslinked surface layer. Accordingly, not only can the decomposition gas effectively be utilized for improving the expansion ratio in the first sheet, but also surface roughening of the sheet which may be caused by the dissipation of the decomposition gas from the surface can be obviated. Moreover, the surface layer, the second sheet, itself can be expanded to provide excellent flexibility and the like in the resulting foamed sheet.

## DETAILED DESCRIPTION

The foam according to this invention is obtained from a laminated sheet prepared through integral lamination of a second sheet (to be described later) onto one or both surfaces of a first sheet (to be described later) by means of coextrusion or heat fusion.

In the above process, basically, the first sheet is made of a composition comprising a polyolefin and also two additive components, a foaming agent and a chemical crosslinking agent; whereas the second sheet is made of a composition comprising a polyolefin and also an additive of foaming agent only.

The polyolefin to be used for forming the first sheet and the second sheet may vary widely and can be exemplified by a low-density polyethylene, a linear low-density polyethylene, an ethylene-vinyl acetate copolymer, an ethylene-ethyl acrylate copolymer or an ethylene-propylene rubber, which can be used alone or as a suitable mixture of two or more of them. The above-listed polyolefins may contain a suitable amount of high-density polyethylene, polypropylene, polybutadiene, polystyrene, etc. as a modifier. Incidentally, the polypropylene referred to herein includes a crystalline ethylene-propylene block copolymer and ethylene-propylene random copolymer as well as polypropylene homopolymer.

The low-density polyethylene referred to herein is a polyethylene having a density of not greater than 0.935 g/cm$^3$, and it is preferred to use a low-density polyethylene having a density of not greater than 0.93 g/cm$^3$ in view of easiness of foaming. The high-density polyethylene is a polyethylene having a density of not less than 0.935 g/cm$^3$.

Further, by allowing the second sheet to have the formulations as described below, heat resistance and antistatic properties can respectively be imparted to the resulting foamed sheets.

To describe in detail, if a high-density polyethylene and/or a polypropylene having a melting point of 130°C or more is incorporated in an amount of at least 20 % by weight to the resin composition for the second sheet, heat resistance can be imparted to the resulting second sheet. If the content of the above polymer is less than 20 % by weight, sufficient heat resistance cannot be obtained. Preferably, the polymer content is 20 to 80% by weight, particularly 30 to 60%.

By incorporating a conductive material into the resin composition for the second sheet, the surface resistivity of the second sheet can be adjusted to $10^6$ to $10^{10}$ $\Omega$, to impart antistatic properties thereto. Conductive materials to be used for such purpose include carbon black, metal oxides such as conductive

3

EP 0 329 490 A2

titanium oxide and conductive zinc oxide, or organic compounds having at least a carbonyl group, a hydroxyl group or an amino group, e.g. REGISTAT (trade name, manufactured by Daiichi Kogyo Seiyaku Co., Ltd.) and ELECTRO-STRIPPER (trade name, manufactured by Kao Corporation). The content of the above conductive materials may suitably be selected such that the surface resistivity of the second sheet may be in the above range.

On the other hand, when the resin composition for the second sheet consists of an ethylene-vinyl acetate copolymer, and ethylene-ethyl acrylate copolymer, and ethylene-propylene rubber,1,2-polybutadiene or a mixture of two or more of them, the resulting second sheet may be soft, and a foamed sheet having excellent cushioning characteristics can be prepared.

Next, the foaming agents to be added to the polyolefin for the first sheet and the second sheet may also vary widely so long as they decompose upon application of heat to generate a decomposition gas, and can be exemplified by azodicarbonamide, dinitropentamethylenetetramine, diphenyl-4, 4-disulfonamide and p,p'-oxybis-benzolsulfonesemicarbazide.

Usually, the amount of the foaming agent to be added herein may suitably be selected depending on the expansion ratio to be achieved in the desired foamed sheet, and preferably in an amount of 2 to 30 parts by weight, particularly 5 to 25 parts by weight, relative to 100 parts by weight of the polyolefin.

The chemical crosslinking agent to be incorporated into the first sheet only is intended for generating radicals upon heat decomposition to achieve the crosslinking reaction of the polyolefin, and can be exemplified by organic peroxides such as dicumyl peroxide, di-t-butyl peroxide, t-butylcumyl peroxide and 2,5-dimethyl-2,5-di(t-butylperoxy)hexane.

The amount of the chemical crosslinking agent to be added for the above-mentioned purpose is preferably in an amount of 0.3 to 5 parts by weight, particularly 0.5 to 2 parts by weight, relative to 100 parts by weight of the polyolefin to be used.

As the method of integrally laminating the first sheet with the second sheet, exemplified are firstly the coextrusion forming method to obtain a multilayered sheet using the respective resin compositions; and secondly a method in which the first sheet and the second sheet are separately formed using the respective resin compositions, followed by heat fusion of both sheets at a temperature at which the foaming agent and the crosslinking agent contained in the respective sheets do not undergo heat decomposition. According to either of these lamination methods, flexibility of the resulting foamed sheet will not be impaired, interlayer separation does not occur along the lamination interface, and the lamination requires no extra cost, so that these methods can be utilized advantageously on an industrial scale. If either method is employed, the compositions to be employed therein may essentially comprise the above components. However, an anti-aging agent, a colouring agent, a processing additive, a foaming coagent, a crosslinking coagent, etc. may also be incorporated in the composition, as necessary.

The second sheet is desirably adapted to have a thickness within the range of 0.3 to 3 mm. If the thickness of the second sheet is less than 0.3 mm, dissipation of the decomposition gas generated during the process of expansion under heating (to be described later) from the surface of the foamed sheet cannot be prevented, so that the expansion ratio of the entire sheet will not be increased; whereas if the thickness is more than 3 mm, equipment generating a very high penetrating power electron beam must be used for the irradiation (to be described later) which is uneconomical. Moreover, portions where the desired crosslinking is not achieved may remain if an electron beam having a low penetrating power is used, resulting in the failure to achieve desirable expansion in the process of expansion under heating. More preferably, the second sheet has a thickness of 0.6 to 2 mm.

In this invention, an ionizing radiation is irradiated onto the second sheet which is a surface layer of the laminated sheet obtained as described above. Upon application of this treatment cross-linking of the polyolefin in the second sheet is achieved.

While the ionizing radiation may be exemplified by an electron beam, γ-ray, a neutron ray, etc., the electron beam is preferably used in view of practicality since control of irradiation dose or penetrating power can be made easily.

Dosage of such ionizing radiation may preferably be in the range of 0.5 to 20 Mrad. If the irradiation dose is less than 0.5 Mrad., the polyolefin in the second sheet cannot be crosslinked sufficiently, leading to reduced expansion ratio. On the other hand, if the irradiation dose is more than 20 Mrad., crosslinking of the second sheet is achieved excessively, thereby the surface layer loses extensibility and becomes brittle. The irradiation dose may more preferably be 2 to 10 Mrad.

Acceleration voltage of the irradiation to be used need not be very high, since this irradiation is intended to crosslink only the second sheet in the laminated sheet, although some adjustment is required corresponding to the thickness of the second sheet, and it may be 100 to 750 KeV, more preferably 100 to 500 KeV.

After crosslinking of the second sheet as described above, the entire laminated sheet is subjected to heat treatment to effect expansion of the first sheet and the second sheet to obtain the desired foamed sheet.

During the process of this heat treatment, cross-linking of the polyolefin in the first sheet is achieved with the aid of the radicals to be generated from the chemical crosslinking agent, and also the first sheet is transformed into a foam with the aid of the decomposition gas generated from the foaming agent, simultaneously. At the same time, the second sheet is transformed into a foam with the action of the decomposition gas to be generated from the foaming agent incorporated also in the second sheet. Usually, the temperature for this heat treatment may sufficiently be 200 to 250 °C.

4

Examples of this invention will be illustrated below, by which the objects and various effects of this invention will become much more apparent.

**EXAMPLES**

Example 1

As the polyolefin, 100 parts by weight of a low-density polyethylene (NOVATEC F-251, trade name, manufactured by Mitsubishi Chemical Industries Ltd. density 0.918 $g/cm^3$) was used, and 10 parts by weight of azodicarbonamide as a foaming agent and 0.8 part by weight of dicumyl peroxide as a chemical crosslinking agent were admixed thereto. The resulting mixture was molded into a 1.4 mm thick sheet (A) by means of extrusion.

Likewise, 100 parts by weight of NOVATEC F-251 was mixed with 10 parts by weight of azodicarbonamide, and the mixture was molded into a 0.8 mm thick sheet (B) by means of extrusion.

Subsequently, the sheet (B) was laminated onto both surfaces of the sheet (A) and subjected to hot press at a temperature of 130°C to obtain a 3-layer laminated sheet having a total thickness of 3 mm. After an electron beam was irradiated onto both surfaces of the laminated sheet at an acceleration voltage of 500 KeV, such that the irradiation dose may be 5 Mrad, the entire laminated sheet was heated in an oven at 230°C for 10 minutes to effect expansion thereof.

Density ($g/cm^3$) of the foamed sheet thus obtained was measured, and surface appearance and presence of crimps were visually observed. Further, formability of this foamed sheet was determined as specified below: The foamed material was subjected to vacuum forming using a cylindrical mold. When the foamed material was successfully formed into a desired cylindrical shape with no broken part, the depth of the formed cylinder was divided by the diameter thereof. If the value thus obtained is 0.5 or higher, it was judged that the foamed material has excellent formability.

Results are summarized in Table 1.

Example 2

A foamed sheet was prepared in the same manner as in Example 1 except that the sheet (B) had a thickness of 0.4 mm. Characteristics and formability of the resulting foamed sheet are shown in Table 1.

Example 3

A foamed sheet was prepared in the same manner as in Example 1 except that the sheet (B) had a thickness of 1.6 mm. Characteristics and formability of the resulting foamed sheet are shown in Table 1.

Example 4

A foamed sheet was prepared in the same manner as in Example 1 except that the NOVATEC F-251 in the sheet (B) was replaced by an ethylene-vinyl acetate copolymer (EVAFLEX V-982-1, trade name, manufactured by Mitsui Dupont Polychemical). Characteristics and formability of the resulting foamed sheet are shown in Table 1.

Control 1

A 3 mm thick sheet was obtained by mixing 100 parts by weight of NOVATEC F-251 with 0.8 part by weight of dicumyl peroxide, and subjecting the mixture to extrusion forming. This sheet was directly heated in an oven at 230°C to obtain a foamed sheet. Characteristics and formability of the resulting foamed sheet are shown in Table 1.

Control 2

a foamed sheet was obtained under the same conditions as used in Control 1 after irradiating an electron beam onto the formed sheet as used in Control 1 at an acceleration voltage of 500 KeV and with an irradiation dose of 5 Mrad. Characteristics and formability of the resulting foamed sheet are shown in Table 1.

As is clear from Table 1, since the foamed sheets obtained in Examples 1 to 4 were all prepared from the laminated sheet according to this invention, they had excellent formability compared with the foamed sheets obtained in Controls 1 and 2, and they also had smooth surfaces with no crimps.

Table 1

| | Example 1 | Example 2 | Example 3 | Example 4 | Control 1 | Control 2 |
|---|---|---|---|---|---|---|
| Thiokness of first sheet (mm) | 1.4 | 1.4 | 1.4 | 1.4 | 3.0 | 3.0 |
| Thickness of second sheet (mm) | 0.8 | 0.4 | 1.6 | 0.8 | - | - |
| Total thickness (mm) | 3.0 | 2.2 | 4.6 | 3.0 | 3.0 | 3.0 |
| Irradiation dose (Mrad) | 5 | 5 | 5 | 5 | - | 5 |
| Density of foamed sheet(g/cm$^3$) | 0.05 | 0.051 | 0.048 | 0.048 | 0.055 | 0.049 |
| Surface appearance | smooth | smooth | smooth | smooth | rough | smooth |
| Crimps | none | none | none | none | none | observed |
| Formability | $\geqq$ 0.5 | $\geqq$ 0.5 | $\geqq$ 0.5 | $\geqq$ 0.5 | $\geqq$ 0.5 | 0.3 |

EP 0 329 490 A2

Example 5

To 80 parts by weight of NOVATEC F-251 (m.p. 107°C) and 20 parts by weight of a high-density polyethylene (STAFLENE E 793, trade name, manufactured by Nippon Petrochemicals Co., Ltd.; m.p. 130°C, density 0.958 g/cm³) was added 15 parts by weight of azodicarbonamide, and the resulting mixture was molded into a 1.5 mm thick sheet (B) by means of extrusion.

On the other hand, 100 parts by weight of EVAFLEX V-982-1 was mixed with 15 parts by weight of azodicarbonamide and 1.0 part by weight of dicumyl peroxide, and the mixture was molded into a 1.5 mm thick sheet (A) by means of extrusion.

Subsequently, the sheet (A) was laminated onto the sheet (B), and the entire sheet was subjected to hot press at a temperature of 140°C to prepare a 2-layer laminated sheet having a total thickness of 3 mm. After an electron beam was irradiated onto the surface (B) of the laminated sheet at an acceleration voltage of 500 KeV so that the irradiation dose may be 6 Mrad, the entire laminated sheet was heated in an oven at 230°C for 10 minutes to achieve expansion thereof. The resulting foamed sheet had a thickness of 8.4 mm.

Properties of the foamed sheet are shown in Table 2, in which heat resistance is indicated with the maximum temperature (°C) when the dimensional change in the foamed sheet is within 10% after leaving it in a thermostatic chamber for 7 days.

Example 6

A foamed sheet was prepared in the same manner as in Example 5 except that the sheet (B) as used in Example 5 was laminated onto both surfaces of the sheet (A) as used in Example 5. Properties of the resulting foamed sheet are shown in Table 2.

Example 7

A foamed sheet was prepared in the same manner as in Example 5 except that the amount of NOVATEC F-251 incorporated was 70 parts by weight and that of STAFLENE E 793 was 30 parts by weight. Properties of the resulting foamed sheet are shown in Table 2.

Example 8

A foamed sheet was prepared in the same manner as in Example 5 except that the amount of NOVATEC F-251 was 60 parts by weight and that of STAFLENE E 793 was 40 parts by weight. Properties of the resulting foamed sheet are shown in Table 2.

Control 3

80 Parts by weight of NOVATEC F-251 was mixed with 20 parts by weight of STAFLENE E 793 and 10 parts by weight of azodicarbonamide, and the mixture was formed into a 3 mm thick sheet.

This sheet was irradiated with an electron beam at an acceleration voltage of 500 KeV with an irradiation dose of 5 Mrad, followed by heating at 230°C. The electron beam failed to penetrate to the internal portion of the sheet so that an insufficiently expanded foamed sheet was obtained. Results are shown in Table 2.

Control 4

Expansion treatment was carried out in the same manner as in Control 3 except that a resin mixture comprising 80 parts by weight of NOVATEC F-251, 20 parts by weight of STAFLENE E 793, 15 parts by weight of azodicarbonamide and 0.8 parts by weight of dicumyl peroxide was used. Properties of the resulting foamed sheet are shown in Table 2.

As is clear from Table 2, the surfaces of the foamed sheets obtained in Examples 5 to 8 were all smooth and also had heat resistance. On the contrary, in control 3 an insufficiently expanded sheet was obtained, whereas the foamed sheet obtained in Control 4 had a rough surface.

Table 2

| | | Example 5 | Example 6 | Example 7 | Example 8 | Control 3 | Control 4 |
|---|---|---|---|---|---|---|---|
| Before expansion | Thickness of first sheet(mm) | 1.5 | 3.0 | 3.0 | 3.0 | - | 3.0 |
| | Thickness of second sheet(mm) | 1.5 | 1.5 | 1.5 | 1.5 | 3.0 | - |
| | Total thickness(mm) | 3.0 | 4.5 | 4.5 | 4.5 | 3.0 | 3.0 |
| After expansion | Thickness of foamed sheet(mm) | 8.4 | 12.0 | 12.3 | 12.1 | insufficient expansion | 12.2 |
| | Density of foamed sheet(g/cm³) | 0.038 | 0.035 | 0.035 | 0.036 | | 0.35 |
| | Surface appearance | smooth | smooth | smooth | smooth | | rough |
| | Heat resistance (°C) | 105 | 105 | 110 | 110 | | 105 |

Example 9

A 1 mm thick sheet (B) was prepared by mixing 100 parts by weight of an ethylene-ethyl acrylate copolymer (DPDJ 6182, trade name, manufactured by Nippon Unicar Co., Ltd.), 10 parts by weight of azodicarbonamide and 10 parts by weight of a carbon black (Ketjenblack EC, trade name, manufactured by Akzo), followed by extrusion forming of the resulting mixture.

The sheet (B) was laminated onto the sheet (A) as formed in Example 1, and subjected to hot press at a temperature of 130°C to obtain a 2-layer laminated sheet having a total thickness of 2.4 mm. After an electron beam was irradiated onto the surface (B) of this laminated sheet at an acceleration voltage of 500 KeV such that the irradiation dose may be 2 Mrad, the entire laminated sheet was heated in an oven at 200°C to effect expansion of the entire laminated sheet. Properties of the resulting foamed sheet are shown in Table 3, wherein the surface resistivity was determined for the surface (B) according to the method of ASTM D 257.

Determination of antistatic property was carried out using a Static Honestmeter (a static honestmeter, manufactured by Shishido Shyokai; an apparatus for detecting continually potential attenuation on the surface of a specimen, after an arbitrary level of high DC voltage is applied to the specimen by way of corona discharge, and the application of high voltage is stopped when the value detected reaches the saturation value), and those which showed a half-life of within 5 seconds were judged to have excellent antistatic property.

Example 10

A foamed sheet was prepared in the same manner as in Example 9, except that the amount of the carbon black incorporated was 5 parts by weight. Properties of the resulting foamed sheet are shown in Table 3.

Example 11

A foamed sheet was prepared in the same manner as in Example 9, except that the sheet (B) as used in Example 10 was laminated onto the sheet (A) as formed in Example 1. Properties of the resulting foamed sheet are shown in Table 3.

Example 12

A foamed sheet was prepared in the same manner as in Example 9, except that 0.6 part by weight of an antistatic agent (ELECTRO-STRIPPER TS-3, trade name, manufactured by Kao Corporation) was used in place of 10 parts by weight of the carbon black. Properties of the resulting foamed sheet are shown in Table 3.

Control 5

The sheet (B) as formed in Example 10 containing 5 parts by weight of the carbon black and having a thickness of 3 mm was subjected to expansion treatment in the same manner as in Example 9. A foamed sheet was not obtained due to insufficient expansion.

Control 6

A 3 mm thick sheet was prepared by mixing 100 parts by weight of DPDJ 6182, 10 parts by weight of azodicarbonamide, 5 parts by weight of Ketjenblack EC and 0.6 part by weight of dicumyl peroxide, followed by extrusion forming of the resulting mixture.

This sheet was subjected to the same expansion treatment as used in Example 9. Properties of the resulting foamed sheet are shown in Table 3.

Control 7

A foamed sheet was prepared in the same manner as in Example 12, except that the amount of the antistatic agent incorporated was 0.2 part by weight. Properties of the resulting foamed sheet are shown in Table 3.

As is clear from Table 3, the foamed sheets obtained in Examples 9 to 12 all had smooth surfaces and also had antistatic property. On the contrary, in Control 5 an insufficiently expanded sheet was obtained, whereas the foamed sheet obtained in Control 6 had a rough surface, and the one obtained in Control 7 had no antistatic property in the surface layers.

9

Table 3

| | | Exampl 9 | Example 10 | Example 11 | Example 12 | Control 5 | Control 6 | Control 7 |
|---|---|---|---|---|---|---|---|---|
| Before expansion | Thickness of first sheet (mm) | 1.4 | 1.4 | 1.4 | 1.4 | - | 3.0 | 1.4 |
| | Thickness of second sheet (mm) | 1.0 | 1.0 | 1.0 | 1.0 | 3.0 | - | 1.0 |
| | Surface resistivity of second sheet($\Omega$) | $10^2$ | $10^6$ | $10^6$ | $10^{12}$ | $10^6$ | $10^6$ | $10^{15}$ |
| | Number of layer | 2 | 2 | 3 | 2 | 1 | 1 | 2 |
| | Total thickness (mm) | 2.4 | 2.4 | 3.4 | 2.4 | 3.0 | 3.0 | 2.4 |
| After expansion | Thickness of foamed sheet(mm) | 5.5 | 5.8 | 7.0 | 5.6 | insufficient expansion | 8.0 | 12.0 |
| | Desity of foamed sheet (g/cm$^3$) | 0.056 | 0.051 | 0.050 | 0.052 | | 0.055 | 0.056 |
| | Antistatic properties of surface layer | good | good | good | good | | good | poor |
| | Surface appearance | smooth | smooth | smooth | smooth | | rough | smooth |

EP 0 329 490 A2

Example 13

The resin composition for the sheet (A) and the sheet (B) as used in Example 1 were charged into different extruders, respectively. A T-die (die width 200 mm) for extruding 3-layer sheet was attached to the heads of the extruders, and a laminated sheet was obtained by means of coextrusion forming using the above 3-layer T-die, through which the material for the sheet (A) is designed to be extruded to form a first sheet and the material for the sheet (B) is designed to be extruded to form the second sheet. This laminated sheet was transformed into a foam in the same manner as in Example 1.

Characteristics and formability of the resulting foamed sheet are shown in Table 4, wherein separation of the layers along the lamination interface was judged by visual observation after the foamed sheet was immersed in a warm water at 70°C for one month.

Example 14

The resin compositions for the sheet (A) and the sheet (B) as used in Example 5 were charged into different extruders, respectively, and a laminated sheet was obtained through a 2-layer T-die (die width 200 mm). After an electron beam was irradiated onto the surface (A) of the laminated sheet at an acceleration voltage of 500 KeV such that the irradiation dose may be 6 Mrad, the entire laminated sheet was heated in an oven at 230°C to effect expansion thereof. Properties of the resulting foamed sheet are shown in Table 4.

Control 8

An electron beam was irradiated onto a resin composition sheet comprising 100 parts by weight of NOVATEC F-251 and 10 parts by weight of azodicarbonamide at an acceleration voltage of 500 KeV such that the irradiation dose may be 5 Mrad, followed by heating in an oven at 230°C to obtain a 2 mm thick foamed sheet. Another resin composition sheet also comprising 100 parts by weight of NOVATEC F-251, 10 parts by weight of azodicarbonamide and 1.0 part by weight of dicumyl peroxide was likewise heated in an oven at 230°C to obtain a 4 mm thick foamed sheet.

These two sheets were heat-fused at 160°C to obtain 2-layer foamed sheet. Properties of the resulting foamed sheet are shown in Table 4.

Control 9

An electron beam was irradiated onto a resin composition sheet comprising 80 parts by weight of NOVATEC F-251, 20 parts by weight of STAFLENE E 793 (high-density polyethylene, manufactured by Nippon Petro Chemical Co., Ltd.) and 15 parts by weight of azodicarbonamide at an acceleration voltage of 500 KeV such that the irradiation dose may be 6 Mrad, followed by heating in an oven at 230°C to obtain 2 mm thick foamed sheet. Another resin composition sheet comprising 100 parts by weight of NOVATEC F-251, 15 parts by weight of azodicarbonamide and 0.8 part by weight of dicumyl peroxide was heated in an oven at 230 °C to obtain a 6 mm thick foamed sheet. An adhesive (SAIBINOL SF 690, manufactured by Saiden Chemical Co., Ltd.) was applied onto both surfaces of the latter foamed sheet, and pasted with the former foamed sheet to obtain a 3-layer foamed sheet. Properties of the resulting laminated sheet are shown in Table 4.

As is clear from Table 4, the foamed sheets obtained in Examples 13 and 14 all had smooth surfaces with no crimps, and no interlayer separation along the lamination interface was observed. On the contrary, in Controls 8 and 9 such separation was observed.

Table 4

| | Example 13 | Example 14 | Control 8 | Control 9 |
|---|---|---|---|---|
| Thickness of first sheet (mm) | 1.4 | 1.5 | foamed sheets were heat-fused | foamed sheets were heat-fused |
| Thickness of second sheet (mm) | 0.8 | 1.5 | | |
| Total thickness (mm) | 3.0 | 3.0 | | |
| Thickness of foamed sheet (mm) | 7 | 8.5 | 6 | 10 |
| Density of foamed sheet(g/cm³) | 0.052 | 0.036 | 0.040 | 0.035 |
| Surface appearance | smooth | smooth | smooth | smooth |
| Crimps | none | none | none | observed |
| Interlayer separation along lamination interface | none | none | observed | observed |

EP 0 329 490 A2

**Claims**

1. A process for preparing a crosslinked polyolefin foam comprising the steps of:laminating integrally, to at least one surface of a first sheet made of a polyolefin composition containing a foaming agent and a chemical crosslinking agent, a second sheet made of a polyolefin composition containing a foaming agent to obtain a laminated sheet;
irradiating an ionizing radiation onto the surface of said second sheet; and
heating the entire laminated sheet.

2. A process as claimed in claim 1, wherein said laminated sheet is obtained by means of coextrusion forming.

3. A process as claimed in claim 1, wherein said laminated sheet is obtained by means of heat fusion.

4. A process as claimed in any preceding claim, wherein the thickness of said second sheet is 0.3 to 3 mm.

5. A process as claimed in any preceding claim, wherein the irradiation dose of said ionizing radiation is 0.5 to 20 Mrad.

6. A process as claimed in any preceding claim, wherein said ionizing radiation is an electron beam.

7. A process as claimed in any preceding claim, wherein the polyolefin to be used for making said first sheet and second sheet is selected from the group consisting of a low density polyethylene, a linear low-density polyethylene, an ethylene-vinyl acetate copolymer, ethylene-ethyl acrylate copolymer and an ethylene-propylene rubber.

8. A process as claimed in claim 7, wherein a high-density polyethylene, polypropylene, polybutadiene or polystyrene is incorporated into the polyolefin.

9. A process as claimed in claim 8, wherein at least 20% by weight of a high-density polyethylene and/or polypropylene, having a melting point of at least 130°C is incorporated into the polyolefin for said second sheet.

10. A process as claimed in claim 9, wherein the content of the high-density polyethylene and/or polypropylene is 20 to 80% by weight.

11. A process as claimed in any of claims 1 to 6, wherein the polyolefin composition of said second sheet is an ethylene-vinyl acetate copolymer, an ethylene-ethyl acrylate copolymer, an ethylene-propylene copolymer, 1,2-polybutadiene, or a mixture of two or more of these.

12. A process as claimed in any preceding claim, wherein a conductive material is incorporated into the polyolefin for said second sheet, whereby the surface resistivity of said second sheet is adjusted to $10^6$ to $10^{10}\Omega$

13. A process as claimed in claim 12, wherein the conductive material is selected from the group consisting of carbon black, a conductive titanium oxide, a conductive zinc oxide, or an organic compound having at least one carbonyl group, hydroxyl group or amino group.

14. A process as claimed in any preceding claim, wherein said foaming agent is selected from the group consisting of azodicarbonamide, dinitropentamethylenetetramine, diphenyl-4,4-disulfonamide and p,p'-oxybis-benzolsulfonesemicarbazide.

15. A process as claimed in any preceding claim, wherein the amount of said foaming agent to be incorporated is 2 to 30 parts by weight relative to 100 parts by weight of the polyolefin.

16. A process as claimed in any preceding claim, wherein said chemical crosslinking agent is selected from the group consisting of dicumyl peroxide, di-t-butyl peroxide, t-butylcumyl peroxide and 2,5-dimethyl-2,5-di-(t-butylperoxy)hexane.

17. A process as claimed in any preceding claim, wherein the amount of said chemical crosslinking agent to be incorporated is 0.3 to 5 parts by weight relative to 100 parts by weight of the polyolefin.